(19) Europäisches Patentamt
European Patent Office
Office européen des brevets

(11) Publication number: **0 011 908**
**B1**

(12) **EUROPEAN PATENT SPECIFICATION**

(45) Date of publication of patent specification: **09.05.84**

(51) Int. Cl.³: **F 16 D 43/284,**
**F 16 D 25/063**

(21) Application number: **79200722.1**

(22) Date of filing: **04.12.79**

(54) **A hydraulically operated clutch.**

(30) Priority: **05.12.78 NL 7811860**

(43) Date of publication of application:
**11.06.80 Bulletin 80/12**

(45) Publication of the grant of the patent:
**09.05.84 Bulletin 84/19**

(84) Designated Contracting States:
**AT BE CH DE FR GB IT LU NL SE**

(56) References cited:
**DE - A - 1 600 171**
**DE - A - 1 948 266**
**US - A - 2 280 042**
**US - A - 3 176 813**
**US - A - 3 819 020**

(73) Proprietor: **Van Doorne's Transmissie B.V.**
**Dr. Hub van Doorneweg 120 Postbus 500**
**NL-5026 RA Tilburg (NL)**

(72) Inventor: **Cadée, Theodorus Petrus Maria**
**Pastoor de Beeckstraat 11**
**Goirle.(NL)**

(74) Representative: **Louet Feisser, Arnold Abraham Alfred**
**Postbus 500**
**NL-5000 AM Tilburg (NL)**

Courier Press, Leamington Spa, England.

# Description

The invention relates to an apparatus for controlling a clutch operable by means of fluid pressure in an operation space, provided with a rotatable control valve with a valve member displaceable by centrifugal force against the force of a spring, for connecting a fluid supply conduit to the operation space. Such clutch is described in DE—A—1600171, figure 14.

Such a clutch may be used for the take-off of a motor vehicle, whereby the motor of the vehicle for some time drives the wheels of the vehicle through slip of the clutch. Often such a take-off clutch is connected in series with a reversing clutch or a unit with the same function, such as a gearbox, in order to shift previously the driving direction (forward or reverse). However, it is also possible to integrate the take-off and the reversing clutch, whereby reversing clutch is provided with two take-off clutches, one for forward take-off one for reverse take-off.

The clutch of the present type may be fitted with one or more friction plates, whether or not fluid-cooled (the so-called wet, resp. dry plate clutch). The clutch may also be provided with a band brake pulled radially inwardly about a cylindrical surface. Naturally, many constructive variants are possible.

The invention concerns the hydraulic operation of such a clutch, i.e. the manner in which a fluid pressure is built up in an operation space, in order to bring the clutch in engagement. This engagement during e.g. the take-off of a vehicle, should be effected at a given clutch engagement characteristic.

Partly depending on the engine speed and/or the engine torque, a specific slip should be present at least for some time, whereby it is in particular of importance that the engagement takes place gradually and without shocks.

The object of the invention is to provide an apparatus for controlling a hydraulically operated clutch, whereby with a relatively simple and reliable construction, an advantageous engagement characteristic can be obtained.

To this effect the apparatus according to the invention is characterised in that the valve member is loadable against the centrifugal force by the fluid pressure in the operation space.

The valve member of the control valve, which for instance rotates with the input shaft of the clutch, resp. the crankshaft of the drive motor, upon increasing speed, will be displaced outwardly under influence of the centrifugal force, against the spring action. Initially, the fluid supply conduit is shut off, so that no fluid pressure can build up in the operation space. At sufficient rotation speed of the control valve, however, a connection will be effected between the fluid supply conduit and the operation space, whereby a fluid pressure is built up in the operation space.

Since this fluid pressure likewise exerts an influence counteracting the centrifugal force, there is created a desired speed range, wherein the fluid pressure in the operation space is lower than that in the fluid supply conduit. Furthermore, according to the invention, the valve member may also be loaded by the fluid pressure in the fluid supply conduit, thus enabling through variation of the supply pressure, to influence the engagement characteristic of the clutch.

The decrease of the fluid pressure in the operation space, as well as a desired throughflow at an equilibrium position of the valve member, may be achieved by fluid leakage or discharge in a different manner; preferably, however, according to a further feature of the invention, fluid may be discharged from the operation space towards the friction portion of the clutch, in order to cool same. This cooling is then cut off in the absence of fluid pressure in the operation space and moreover no additional cooling fluid supply conduit is required.

According to another feature of the invention this fluid supply to the friction portion may be closed by the valve member, when such a rotation speed is attained that (substantially) no slip occurs any longer, in that the valve member has been displaced sufficiently far, e.g. under influence of the centrifugal force. Such displacement may also be effected differently, e.g. by a pressure increase in the fluid supply conduit.

It is also possible according to the invention that the valve member in case of sufficient displacement, eliminates the load by the fluid pressure in the operation space, i.e. shuts off the fluid connection between the operation space and the fluid pressure space for loading the valve member. It can thereby be achieved that the valve member is not radially inwardly displaced until at a rotation speed lower than the rotation speed which is necessary for outward displacement. This may be important if on the one hand, for take-off, a higher engine speed is desired where slip occurs (e.g. up to 2200 rev. per minute of the motor), while on the other hand, once the vehicle is driving, it should be possible to drive without slip of the clutch at a lower engine speed. (e.g. 1500—1800 rev. per minute).

Three embodiments of the invention will now be explained, by way of example, with reference to the accompanying drawings.

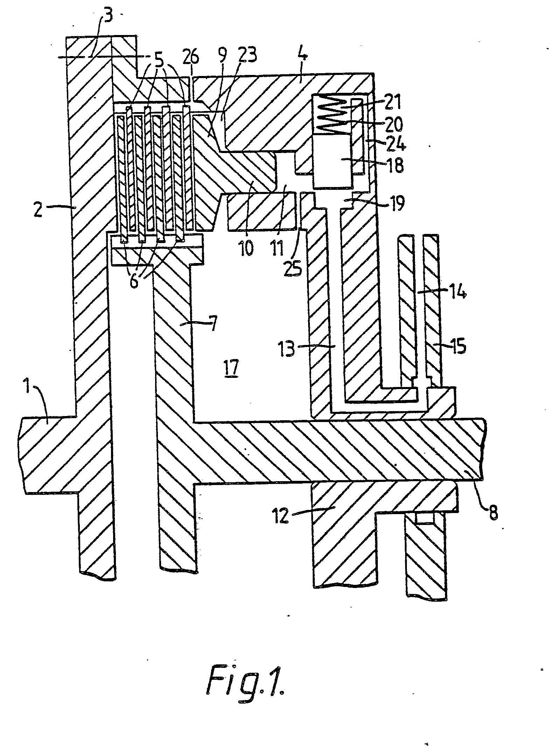

In figures 1, 2 and 3 corresponding parts are indicated by identical reference numerals.

The clutch according to the embodiments is provided with an input shaft 1 to which is attached a flange 2, possibly at the same time flywheel. Flange 2 is attached e.g. through bolts 3, to clutch housing 4, which consequently rotates together with the input shaft. To the clutch housing four annular clutch plates 5 are mounted for axial movement, while four other clutch plates 6 are connected for axial movement to disc 7 of the output shaft of the clutch.

The clutch according to the embodiments is furthermore fitted with an annular pressure body 9, which is adapted for axial movement with a portion 10 acting as piston in a substantially annular recess acting as cylinder in clutch housing 4 under influence of fluid pressure in operation space 11.

Clutch housing 4 is furthermore fitted with a portion 12 mounted about output shaft 8 in order to connect fluid supply conduit 13 to conduit 14 in a stationary wall 15. Clutch housing 4 also accommodates a control valve having a radially movable valve member 18, which on the end is loaded by both helical spring 20 and by the fluid pressure in space 21.

Upon rotation of clutch housing 4 valve member 18, depending on the rotation speed, is subjected to a radially outwardly oriented force (centrifugal force). Upon displacement of valve member 18 outwardly, there is created a connection between fluid supply conduit 13, via space 19 to operation space 11. Thus pressure body 9 is displaced to the left (in the drawing) and the clutch plates 5, 6 are pressed against each other and against flange 2. The extent of thus effected friction (slip) between input shaft 1 and output shaft 8 depends on the fluid pressure in operation space 11.

According to Fig. 1 there is present in the first embodiment a fluid conduit 24, so that the fluid pressure in the operation space 11 likewise prevails in space 21. Furthermore there is disposed a fluid conduit 25 for restricted fluid passage between operation space 11 and space 17, and a fluid conduit 26 through which the fluid from space 17 can flow away outwardly via clutch plates 5, 6. The latter may be desirable for cooling the clutch plates 5, 6.

The apparatus according to the embodiment shown in Fig. 1 is operated as follows.

In case of no or little rotation speed of input shaft 1 (and clutch housing 4) valve member 18 will be pressed inwardly by helical spring 20 in such a way that fluid supply conduit 13 is shut off and there is no fluid pressure in operation space 11 (the fluid may flow away via conduit 25).

At a given rotation speed valve member 18, under influence of the centrifugal force, will start to move radially outwardly and thus creating a connection between fluid supply conduit 13 and the operation space 11 (as shown in the Figure). Since conduit 25 allows only a restricted throughflow, partly depending on the pressure in conduit 13, there is built up a fluid pressure in operation space 11, which fluid pressure likewise exerts via space 21 a radially inwardly directed force on valve member 18. Valve member 18 has thus the tendency to again shut off the fluid supply to operation space 11. There is thus produced, depending on the rotation speed of input shaft 1, an equilibrium position of valve member 18.

At sufficiently large rotation speed, there is realized a complete connection between fluid supply conduit 13 and operation space 11, whereby the supplied fluid pressure should be such that there exists sufficient friction between the clutch plates 5, 6, so that no slip occurs any longer.

It will be clear that slippage of the clutch occurs in a specific speed range of the input shaft 1, whereby valve member 18 in an equilibrium condition, is adapted to maintain the fluid flow between supply conduit 13 and the operation space 11 restricted. By feedback of the fluid pressure prevailing in the operation space 11 to the equilibrium of forces on valve member 18, there may now be obtained a desired slip characteristic of the clutch.

Another advantage of the present apparatus is the fact that, as long as the fluid pressure in operation space 11 is low, so that a larger pressure difference is present over the valve, a large fluid supply to said operation space 11 can take place, which may be important if pressure member 9 has first to traverse a given path before the clutch plates 5, 6 touch each other. Only when the clutch plates 5, 6 touch each other, a fluid pressure in operation space 11 and thereby in space 21 can be built up.

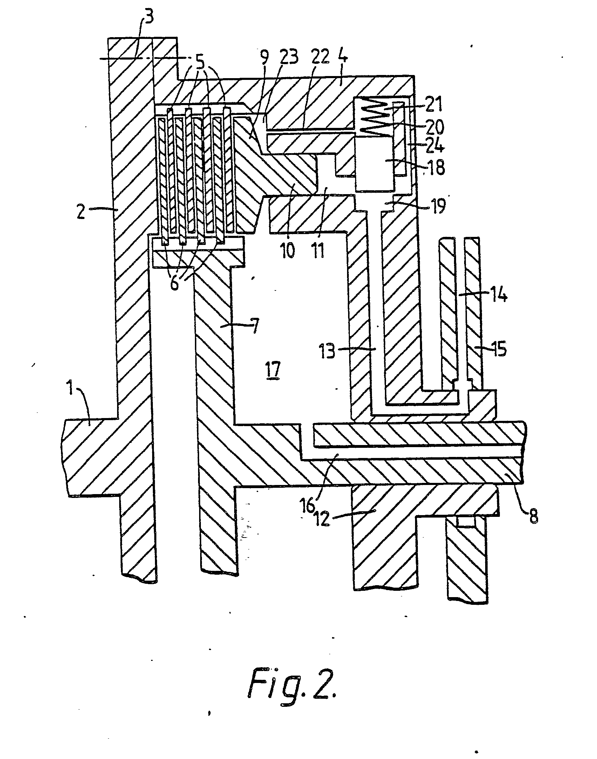

The embodiment shown in Fig. 2 is operated correspondingly, the cooling of the friction portion however takes place by a fluid flow from space 21, via conduit 22 with restricted throughflow to the friction portion, which fluid is discharged via space 17 and conduit 16 which is disposed in the output shaft 8. In this embodiment the cooling is disconnected if there is no pressure build-up in operation space 11 and if such a speed is attained that valve member 18 shuts off conduit 22 by radial displacement outwardly. Thereby the fluid pressure in the operation space is maximal so that there is (practically) no slip any more.

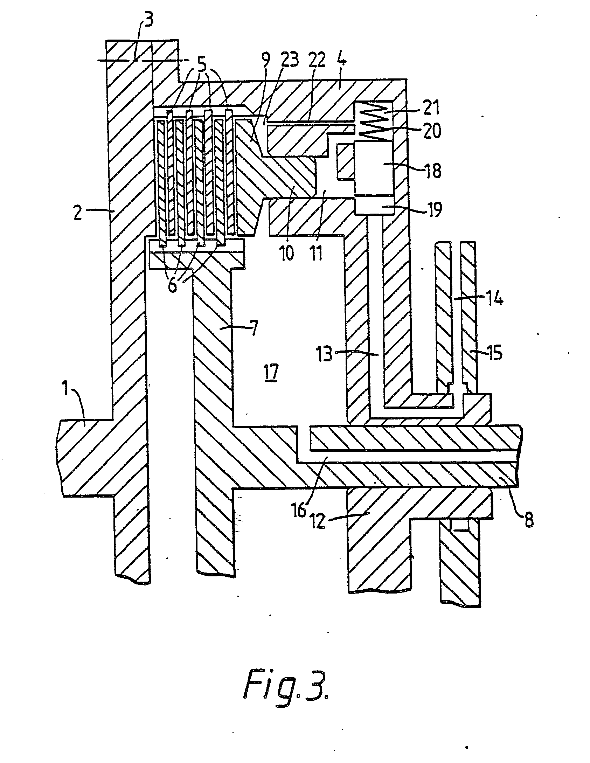

The same is the case in the embodiment shown in Fig. 3, wherein, however, also the connection between the operation space 11 and space 21 is broken, so that the fluid pressure in space 21 drops out. For the radial inward displacement of valve member 18, consequently, a lower speed of the input shaft 1 is required than the speed at which the centrifugal force is sufficiently large to outwardly displace valve member 18 inter alia against the fluid pressure in space 21. The clutch once being in engagement thus continues to be completely in engagement at speeds that are lower than those at which initially slip occurred.

In all three embodiments a variation of the fluid pressure in supply conduit 13 may influence the clutch characteristic (engagement characteristic) in that said fluid pressure via space 19 exerts a radially outwardly directed force on valve member 18, i.e. coacting with the centrifugal force to build up a fluid pressure in operating space 11. This may be of importance as external, additional control possibility.

Moreover, in the embodiments it is possible to build in the required restrictions, e.g. in fluid conduit 24, in order to effect a retarded displacement of valve member 18. Upon the rapid increase of the input speed, the clutch will then come into engagement at a higher speed, which may be desirable.

Naturally, the embodiments should only be seen as examples and many variants are possible, whereby especially types of clutches other than wet plate clutches and a different construction are possible.

## Claims

1. An apparatus for controlling a clutch operable by means of a fluid pressure in an operation space, provided with a rotatable control valve with a valve member displaceable by centrifugal force against the force of a spring for connecting a fluid supply conduit to the operation space, characterized by the valve member (18), being loadable against the centrifugal force, by the fluid pressure in the operation space (11).

2. An apparatus according to claim 1, characterized in that the valve member (18) is loadable — in the same sense as the centrifugal force — by the fluid pressure in the fluid supply conduit (13).

3. An apparatus according to claim 1 or 2, characterized by means (22) for the limited outflow of fluid from the operation space (11) to the friction portion (5, 6) of the clutch.

4. An apparatus according to claim 3, characterized in that the means (22) are closable by displacement of the valve member (18).

5. An apparatus according to any one of the preceding claims, characterized in that the valve member (18), by further displacement against the force of the spring (20), closes the fluid connection between the operation space (11) and the space (21) for loading the valve member (18).

## Revendications

1. Dispositif de commande d'un embrayage pouvant être actionné par la pression exercée par un fluide dans une chambre de manoeuvre, muni d'une soupape de commande rotative comportant un organe de soupape pouvant être déplacé par la force centrifuge à l'encontre de la force d'un ressort pour relier une conduite d'alimentation de fluide à la chambre de manoeuvre, caractérisé en ce que l'organe de soupape (18) peut être chargé à l'encontre de la force centrifuge par la pression du fluide régnant dans la chambre de manoeuvre (11).

2. Dispositif selon la revendication 1, caractérisé en ce que l'organe de soupape (18) peut être chargé dans le même sens que la force centrifuge par la pression du fluide régnant dans la conduite d'amenée de fluide (13).

3. Dispositif selon la revendication 1 ou 2, caractérisé par des moyens (22) déterminant une sortie limitée du fluide dans la chambre de manoeuvre (11) vers la partie (5, 6) de l'embrayage où s'établit la friction.

4. Dispositif selon la revendication 3, caractérisé en ce que les moyens (22) peuvent être fermés par déplacement de l'organe de soupape (18).

5. Dispositif selon l'une quelconque des revendications précédentes, caractérisé en ce que l'organe de soupape (18) forme, en continuant à se déplacer à l'encontre de la force du ressort (20), la connexion à fluide entre la chambre de manoeuvre (11) et l'espace (21) destinée à charger l'organe de soupape (18).

## Patentansprüche

1. Vorrichtung zur Steuerung einer Kupplung, die durch einen Flüssigkeitsdruck in einem Arbeitsraum betätigbar und mit einem drehbaren Steuerventil mit einem Verschlussstück ausgerüstet ist, das durch Fliehkraft gegen die Kraft einer Feder verschiebbar ist, um einen Flüssigkeitszufuhrkanal mit dem Arbeitsraum zu verbinden, dadurch gekennzeichnet, dass das Verschlussstück (18) gegen die Fliehkraft durch den Flüssigkeitsdruck im Arbeitsraum (11) belastbar ist.

2. Vorrichtung nach Anspruch 1, dadurch gekennzeichnet, dass das Verschlussstück (18) in Richtung der Fliehkraft durch den Flüssigkeitsdruck im Flüssigkeitszufuhrkanal (13) belastbar ist.

3. Vorrichtung nach Anspruch 1 oder 2, gekennzeichnet durch Mittel (22) zum begrenzten Ausströmen von Flüssigkeit aus dem Arbeitsraum (11) zum Friktionsteil (5, 6) der Kupplung.

4. Vorrichtung nach Anspruch 3, dadurch gekennzeichnet, dass die Mittel (22) durch Verschieben des Verschlussstückes (18) verschliessbar sind.

5. Vorrichtung nach einem der vorhergehenden Ansprüche, dadurch gekennzeichnet, dass das Verschlussstück (18) bei weiterer Verschiebung gegen die Kraft der Feder (20) die Flüssigkeitsverbindung zwischen dem Arbeitsraum (11) und dem Raum (21) zum Belasten des Verschlussstückes (18) verschliesst.

Fig.1.

1

Fig.2.

Fig.3.